# EUROPÄISCHE PATENTSCHRIFT

(11) **EP 3 622 312 B1**
(45) Veröffentlichungstag und Bekanntmachung des Hinweises auf die Patenterteilung: **02.09.2026**
(21) Anmeldenummer: 18724837.2
(22) Anmeldetag: 11.05.2018
(51) Int. Cl.: G01S 7/40, G01S 13/34, G01S 7/35, G01S 13/36

(54) **VERFAHREN UND VORRICHTUNG ZUR KOMPENSATION VON PHASENRAUSCHEN**
METHOD AND DEVICE FOR COMPENSATING FOR PHASE NOISE
PROCÉDÉ ET DISPOSITIF DE COMPENSATION DES BRUITS DE PHASE

(30) Priorität: 12.05.2017 DE 102017110403
(43) Veröffentlichungstag der Anmeldung: 18.03.2020
(73) Patentinhaber: Symeo GmbH, 85579 Neubiberg (DE)
(72) Erfinder: VOSSIEK, Martin, 90766 Fürth (DE); GOTTINGER, Michael, 91054 Buckenhof (DE); GULDEN, Peter, 85435 Erding (DE)
(74) Vertreter: Meissner Bolte Partnerschaft mbB
(86) Internationale Anmeldenummer: PCT/EP2018/062192
(87) Internationale Veröffentlichungsnummer: WO 2018/206755

(56) Entgegenhaltungen:
- WO-A1-98/38524
- VOSSIEK M ET AL: "Novel FMCW radar system concept with adaptive compensation of phase errors", MICROWAVE CONFERENCE, 1996. 26TH EUROPEAN, IEEE, PISCATAWAY, NJ, USA, 6 September 1996 (1996-09-06), pages 135 - 139, XP031605283
- THURN KARSTEN ET AL: "Noise in Homodyne FMCW radar systems and its effects on ranging precision", IEEE - MTTS INTERNATIONAL MICROWAVE SYMPOSIUM. DIGEST, IEEE, US, 2 June 2013 (2013-06-02), pages 1 - 3, XP032545918, ISSN: 0149-645X, [retrieved on 20131227], DOI: 10.1109/MWSYM.2013.6697654
- MARKUS PICHLER ET AL: "Phase-Error Measurement and Compensation in PLL Frequency Synthesizers for FMCW Sensors-I: Context and Application", IEEE TRANSACTIONS ON CIRCUITS AND SYSTEMS PART I: REGULAR PAPERS, IEEE SERVICE CENTER, NEW YORK, NY, US, vol. 54, no. 5, 1 May 2007 (2007-05-01), pages 1006 - 1017, XP011180965, ISSN: 1057-7122, DOI: 10.1109/TCSI.2007.895512

## Beschreibung

Die Erfindung betrifft ein Verfahren und eine Vorrichtung zur Kompensation von Rauschen, insbesondere Phasenrauschen, in einem Primär-Radarsystem, beispielsweise in einem Fernerkundungssystem oder in einem System mit hohem Phasenrauschanteil.

Primär-Radarsysteme, insbesondere FMCW-Primär-Radarsysteme (wobei FMCW für *Frequency Modulated Continuous Wave* bzw. für ein frequenzmoduliertes Dauer-Strichsignal steht) sind grundsätzlich bekannt. Ein gesendetes FMCW-Signal mit einer linearen Frequenzrampe, die durch einen Lokaloszillator erzeugt werden kann, kann als ${s}_{TX} \left(t\right) = {e}^{j 2 π \left({f}_{c}t+\frac{μ}{2}{t}^{2}\right)} {e}^{{jφ}_{n} \left(t\right)}$ dargestellt werden, wobei *f_{c}* die Trägerfrequenz, *µ = B*/*Tₛ* die Steigung der Frequenzrampe über der Zeit (Sweeprate) und *φₙ*(*t*) das Phasenrauschen des Lokaloszillators angeben. Dieses Signal wird über einen Übertragungskanal gesendet, welcher dieses verzögert und um einen Wert A dämpft, welcher dem Rückstreuquerschnitt des zu beobachtenden Objekts entspricht. Das Empfangssignal ${s}_{RX} \left(t\right) = {As}_{TX} \left(t-τ\right) = {Ae}^{j 2 π \left({f}_{c}\left(t-τ\right)+\frac{μ}{2}{\left(t-τ\right)}^{2}\right)} {e}^{{jφ}_{n} \left(t-τ\right)}$ wird mit einem Mischer in das Basisband, gemäß ${s}_{m} \left(t\right) = {s}_{TX} \left(t\right) {s}_{RX}^{∗} \left(t\right) = {Ae}^{j 2 π \left({f}_{c}τ+\frac{μ}{2}\left(2tτ-{τ}^{2}\right)\right)} {e}^{j \left({φ}_{n}\left(t\right)-{φ}_{n}\left(t-τ\right)\right)} = {Ae}^{j {Φ}_{m} \left(t\right)}$ gemischt (die Operation * bedeutet hierbei die komplexe Konjugation), wobei aus der sog. Beatfrequenz ${f}_{b} \left(t\right) = \frac{1}{2 π} \frac{d {Φ}_{m} \left(t\right)}{dt} = μτ + \frac{1}{2 π} \frac{d}{dt} \left({φ}_{n}\left(t\right)-{φ}_{n}\left(t-τ\right)\right) = μτ + δf \left(t\right)$ durch Umformung eine Laufzeit einer elektromagnetischen Welle im Übertragungskanal und daraus eine Entfernung zu einem Objekt bestimmt werden kann. Dies kann beispielsweise mit Hilfe der Fouriertransformation geschehen.

Alternativ kann statt einer Mischung auch eine Korrelation, bevorzugt bei niedrigen Frequenzen, durchgeführt werden.

Bei gutem Signal-zu-Rausch-Verhältnis (SNR) stellt das korrelierte Phasenrauschen, also die zweite Komponente von *f_{b}*(*t*)*,* jedoch eine Grenze an die erreichbare Genauigkeit eines Fernerkundungssystems dar. Die Varianz der Schätzung des Abstands zum Objekt hängt hierbei von den statistischen Eigenschaften der Zufallsfolge *δf*(*t*) ab, d.h. in diesem Fall u.a. von der Laufzeit im Kanal und nimmt mit steigender Entfernung bzw. Laufzeit zu. Ein zusätzlicher Einfluss durch thermisches Rauschen wird bei dieser Darstellung als wesentlich geringer als das Phasenrauschen angenommen und daher vernachlässigt. XP031605283 offenbart ein FMCW Radarsystem-Konzept mit adaptiver Kompensation des Phasenrauschens

Die Aufgabe der Erfindung besteht darin, ein Verfahren bzw. eine Vorrichtung zur effektiven Kompensation von Rauschen, insbesondere Phasenrauschen mit möglichst einfachen Mitteln vorzuschlagen.

Diese Aufgabe wird insbesondere durch ein Verfahren bzw. eine Vorrichtung nach den unabhängigen Ansprüchen gelöst.

Dabei wird die Aufgabe durch ein Verfahren zur Kompensation von Rauschen, insbesondere Phasenrauschen, in einem Primärradarsystem gelöst,
wobei ein erstes Sendesignal (erstes Radarsignal) mit einem ersten, durch das Rauschen verursachten, Störanteil durch eine Sende-Empfangseinheit gesendet wird,
wobei mindestens ein zweites Sendesignal (zweites Radarsignal) mit einem zweiten, durch das Rauschen verursachten, Störanteil zeitgleich oder zeitlich überlappend mit dem ersten Sendesignal durch die Sende-Empfangseinheit gesendet wird,
wobei die Sendesignale vorzugsweise derart beschaffen sind, dass bei einer Weiterverarbeitung und Auswertung der Sendesignale Phasen- und/oder Frequenzverschiebungen, die aus den Störanteilen resultieren, zumindest teilweise kompensiert werden.

Dabei wird
- das erste Sendesignal an mindestens einem Objekt reflektiert, so dass ein erstes reflektiertes Empfangssignal die Sende-Empfangseinrichtung erreicht,
- ein erstes Messsignal aus dem ersten Sendesignal und dem ersten Empfangssignal, insbesondere durch Mischen, generiert,
- das zweite Sendesignal an mindestens einem (insbesondere dem mindestens einen beim ersten Spiegelstrich genannten) Objekt reflektiert, so dass ein zweites Empfangssignal die Sende-Empfangseinrichtung erreicht, und
- ein zweites Messsignal aus dem zweiten Sendesignal und dem zweiten Empfangssignal, insbesondere durch Mischen generiert.

Ein Aspekt der Erfindung liegt darin, dass nicht nur ein erstes Sendesignal bzw. erstes Messsignal, sondern auch (mindestens) ein zweites Sendesignal bzw. (mindestens) ein zweites Messsignal generiert wird, das so beschaffen ist, dass sich durch (Phasen-)rauschen verursachte Phasen- und/oder Frequenzverschiebungen (z. B. von Messfrequenzen, insbesondere Mischfrequenzen bzw. Beat-Frequenzen) zumindest teilweise aufheben können (bzw. kompensiert werden können). Alternativ oder zusätzlich kann statt einer Mischung auch eine Korrelation, bevorzugt bei niedrigen Frequenzen, durchgeführt werden.

Die Begriffe Sendesignal und gesendetes Signal sowie die Begriffe empfangenes Signal und Empfangssignal werden synonym verwendet. Bei den gesendeten bzw. empfangenen Signalen handelt es sich um (von der Sende-Empfangseinheit drahtlos abgehende bzw. dort drahtlos eingehende) HF-Signale bzw. Radarsignale.

Unter einem Messsignal ist insbesondere ein Mischsignal zu verstehen, das sich aus einem gesendeten Signal und einem (an einem Objekt) reflektierten bzw. empfangenen Signal, das auf dem gesendeten Signal basiert, ableitet. Insbesondere kann es sich bei einer derartigen Mischung um eine komplex konjugierte Multiplikation des empfangenen (reflektierten) Signals mit dem gesendeten Signal handeln.

Insgesamt ermöglicht das Verfahren eine effektive Reduzierung oder (vollständige) Unterdrückung von (korreliertem) Phasenrauschen. Damit kann beispielsweise die Genauigkeit einer Entfernungsbestimmung in einem Fernerkundungssystem verbessert werden.

Vorzugsweise sind ein erster Störanteil des ersten Messsignals und ein zweiter Störanteil des zweiten Messsignals komplex konjugiert zueinander. Dadurch kann auf besonders einfache Art und Weise eine effektive Reduzierung (oder vollständige Unterdrückung) von (korreliertem) Phasenrauschen erfolgen.

Das Senden des zweiten Signals erfolgt vorzugsweise zeitgleich oder zumindest zeitlich überlappend mit dem Senden des ersten Signals. Unter einem zeitlichen Überlapp ist insbesondere zu verstehen, dass zumindest während 20 %, vorzugsweise während 50 % der Signaldauer des Sendens des ersten Signals auch das zweite Signal gesendet wird.

Vorzugsweise weist das erste gesendete Signal zumindest einen Faktor auf, der komplex konjugiert zu einem Faktor des zweiten gesendeten Signals ist. Dadurch kann auf einfache Art und Weise eine effektive Reduktion (Unterdrückung) von Phasenrauschen erfolgen. Insbesondere können auf einfache Art und Weise Messsignale (vorzugsweise durch Mischen) erzeugt werden, die komplex konjugierte Störanteile aufweisen.

In der Ausführungsform weist das erste gesendete Signal mindestens eine Frequenzrampe mit einer ersten Steigung auf und das zweite gesendete Signal mindestens eine Frequenzrampe mit einer zweiten Steigung, wobei die erste Steigung ein anderes Vorzeichen hat als die zweite Steigung. Weiter sind Beträge der ersten und zweiten Steigung (zumindest im Wesentlichen) gleich. Aus derartigen gesendeten Signalen können auf besonders einfache Art und Weise Messsignale (Mischsignale) generiert werden, die ein Phasenrauschen reduzieren (entfernen).

Ein Basis-HF-Signal für das erste und das zweite Messsignal bzw. für das erste und zweite gesendete Signal wird durch denselben HF-Generator (Lokaloszillator, kurz: LO) erzeugt. Das damit einhergehende (korrelierte) Phasenrauschen kann dann besonders effektiv unterdrückt werden. Im Allgemeinen sind das erste und das zweite gesendete Signal vorzugsweise so beschaffen, dass sie ein korreliertes Phasenrauschen aufweisen.

Unter einem Basis-HF-Signal ist insbesondere ein Hochfrequenz-Signal zu verstehen, das (unmittelbar) aus dem Ausgang eines entsprechenden Generators (Oszillators) stammt. Dieses Basis-HF-Signal kann dann ggf. nachfolgend moduliert werden.

Das Basis-HF-Signal und/oder die gesendeten (HF-)Signale (bzw. Radarsignale) können ein Frequenz bzw. Frequenzen von mindestens 100 MHz oder mindestens 1 GHz aufweisen.

Das erste gesendete Signal bzw. das erste Messsignal basiert auf einem Output eines ersten Modulationsgenerators und das zweite gesendete Signal bzw. das zweite Messsignal auf einem Output eines zweiten Modulationsgenerators. Alternativ basieren das erste und zweite gesendete Signal bzw. das erste und zweite Messsignal auf einem Output eines gemeinsamen Modulationsgenerators. Insoweit ein gemeinsamer Modulationsgenerator zum Einsatz kommt, kann insbesondere ein mittels direkter digitaler Synthese (DDS) erzeugtes Signal zum Einsatz kommen.

Vorzugsweise wird ein (Grund-)Signal für das erste und/oder zweite Sendesignal (mit einer (vergleichsweise niedrigen Frequenz) erzeugt und dann mit einem Modulationsgenerator, insbesondere Vektormodulator, das jeweilige Sendesignal moduliert, wobei das erste und/oder zweite Sendesignal vorzugsweise dadurch erzeugt wird/werden, dass ein Modulationssignal auf einen reellen oder komplexen Eingang des Modulationsgenerators, insbesondere Vektormodulators, gelegt wird, vorzugsweise derart, dass zusätzlich zum ersten Sendesignal das zweite - und vorzugsweise gespiegelte - Sendesignal erzeugt wird.

Vorzugsweise wird aus dem ersten und/oder zweiten Messsignal eine Frequenz, (vorzugsweise enthaltend eine Laufzeitinformation), insbesondere Beatfrequenz, abgeleitet. Alternativ oder zusätzlich werden die Messsignale oder aus den Messsignale abgeleitete Signale oder Teile davon, insbesondere eine jeweilige Frequenz (vorzugsweise enthaltend eine Laufzeitinformation), vorzugsweise Beatfrequenz, miteinander kombiniert, vorzugsweise addiert.

In einer ersten bevorzugten Alternative kann das erste Messsignal durch einen ersten Mischer erzeugt werden, und das zweite Messsignal durch einen zweiten Mischer. In einer zweiten Alternative kann das erste Messsignal und das zweite Messsignal durch einen gemeinsamen (insbesondere komplexen) Mischer erzeugt werden. Dadurch können auf einfache Art und Weise Messsignale mit den gewünschten Eigenschaften erzeugt werden.

Die obengenannte Aufgabe wird weiterhin gelöst durch eine Vorrichtung zur Kompensation von Rauschen, insbesondere Phasenrauschen in einem Primärradarsystem, insbesondere zur Durchführung des obigen Verfahrens, umfassend eine Sende-Empfangseinheit ausgebildet zum Erzeugen und Senden eines ersten Sendesignals mit einem ersten, durch das Rauschen verursachten, Störanteil und ausgebildet zum Erzeugen und gleichzeitigen oder zeitlich überlappenden Senden mindestens eines zweiten Sendesignals mit einem zweiten, durch das Rauschen verursachten, Störanteil derart, dass bei einer Weiterverarbeitung und Auswertung der Sendesignale Phasen- und/oder Frequenzverschiebungen, die aus den Störanteilen resultieren, zumindest teilweise kompensierbar sind.

Dabei ist eine Messsignalgenerierungseinrichtung vorgesehen zum Generieren eines ersten (sₘ₁(t)) Messsignals aus dem ersten Sendesignal und einem ersten, auf einer Reflexion der ersten Sendesignal basierenden, Empfangssignal und zum Generieren mindestens eines zweiten (sₘ₂(t)) Messsignals aus dem zweiten Sendesignal und einem zweiten, auf einer Reflexion der zweiten Sendesignal basierenden, Empfangssignal.

Ein erster Störanteil des ersten Messsignals und ein zweiter Störanteil des zweiten Messsignals sind vorzugsweise komplex konjugiert zueinander.

Vorzugsweise weist das erste Sendesignal einen ersten Faktor auf, der komplex konjugiert zu einem zweiten Faktor des zweiten Sendesignals (s₂(t)) ist.

Vorzugsweise umfasst die Vorrichtung eine Sende-Empfangseinrichtung zum Senden eines ersten Signals und zum Empfangen eines ersten reflektierten Signals, das an mindestens einem Objekt reflektiert ist, und zum Senden eines zweiten Signals und zum Empfang eines zweiten reflektierten Signals, das an mindestens einem Objekt reflektiert ist.

In einer bevorzugten Ausführungsform umfasst die Sende-Empfangseinheit eine Sendeantenne und eine Empfangsantenne, wobei die Sendeantenne das erste und zweite Signal sendet und die Empfangsantenne das erste und zweite reflektierte Signal empfängt. In einer alternativen Ausführungsform kann die Sende-Empfangseinheit eine gemeinsame Sende-Empfangsantenne umfassen, wobei die gemeinsame Sende-Empfangsantenne das erste Signal sendet und das erste reflektierte Signal empfängt und das zweite Signal sendet und das zweite reflektierte Signal empfängt. Das erste und das zweite Signal können ggf. auch über verschiedene (eine erste Sendeantenne sowie eine zweite Sendeantenne) gesendet werden. Grundsätzlich kann eine Vielzahl von Sende- und/oder Empfangsantennen vorgesehen sein.

Vorzugsweise ist die Messsignalgenerierungseinrichtung, insbesondere umfassend einen oder mehrere Mischer, zum Generieren des ersten Messsignals aus dem gesendeten ersten Signal und dem ersten reflektierten Signal, insbesondere durch Mischen, ausgebildet und zum Generieren des zweiten Messsignals aus dem gesendeten zweiten Signal und dem zweiten reflektierten Signal, insbesondere durch Mischen, vorgesehen.

Die Messsignalgenerierungseinrichtung umfasst in einer Ausführungsform eine erste Messsignalgenerierungseinheit, insbesondere einen ersten Mischer und eine zweite Messsignalgenerierungseinheit, insbesondere einen zweiten Mischer, wobei die erste Messsignalgenerierungseinheit das erste Messsignal, insbesondere durch Mischen, generiert und die zweite Messsignalgenerierungseinheit das zweite Messsignal, insbesondere durch Mischen, generiert. In einer alternativen Ausführungsform umfasst die Messsignalgenerierungseinrichtung eine gemeinsame Messsignalgenerierungseinheit, insbesondere einen gemeinsamen Mischer, wobei die gemeinsame Messsignalgenerierungseinheit das erste Messsignal, insbesondere durch Mischen, generiert und das zweite Messsignal, insbesondere durch Mischen, generiert.

Die Vorrichtung weist einen HF-Generator zur Erzeugung eines Basis-HF-Signals für das erste und das zweite Messsignal bzw. für das erste und zweite gesendete Signal auf. Bei dem HF-Generator kann es sich um einen spannungsgesteuerten Oszillator (VCO für *Voltage-Controlled Oscillator)* handeln. Es ist ein erster Modulationsgenerator vorgesehen, auf dessen Output das erste gesendete Signal bzw. das erste Messsignal beruht und ein zweiter Modulationsgenerator vorgesehen, auf dessen Output das zweite gesendete Signal bzw. das zweite Messsignal beruht. Alternativ ist ein gemeinsamer Modulationsgenerator vorgesehen, auf dessen Output das erste und zweite gesendete Signal bzw. das erste und zweite Messsignal beruhen.

Die oben genannte Aufgabe wird weiterhin gelöst durch eine Verwendung des obigen Verfahrens und/oder der obigen Vorrichtung zur Steigerung der Genauigkeit einer Abstandsmessung in einem Fernerkundungssystem.

Ggf. kann/können das obige Verfahren und/oder die obige Vorrichtung auch in einem System (insbesondere mit vergleichsweise einfach aufgebauter oder gänzlich fehlender PLL) zur Messung von kurzen Entfernungen zum Einsatz kommen.

Die obige Aufgabe wird weiterhin gelöst durch ein Radar-System, insbesondere Primär-Radarsystem (für die Fernerkundung), mit einer Sende-Empfangseinheit das zur Durchführung des obigen Verfahrens ausgebildet ist und/oder eine Vorrichtung der obigen Art umfasst. Grundsätzlich können ein erstes Messsignal und genau ein zweites Messsignal zum Einsatz kommen. Es können jedoch auch mehr als zwei Messsignale eingesetzt werden. Solange mindestens ein zweites Messsignal so ausgebildet ist, dass eine durch ein (korreliertes) Rauschen, insbesondere Phasenrauschen, verursachte Frequenzverschiebung zumindest teilweise entgegengesetzt zu einer durch das Rauschen, insbesondere Phasenrauschen, verursachten Frequenzverschiebung des ersten Messsignals ist, kann letztlich zumindest eine Reduktion des Phasenrauschens erreicht werden. Beispielsweise wäre es auch denkbar, dass drei Messsignale zum Einsatz kommen, wobei zweites und drittes Messsignal eine entgegengesetzte Frequenzverschiebung zum ersten Messsignal aufweisen, so dass insgesamt ein (korreliertes) Rauschen, insbesondere Phasenrauschen, effektiv kompensiert werden kann.

Die Erfindung wird nachfolgend anhand von Ausführungsbeispielen sowie von Figuren näher erläutert.

Es zeigen:
- Fig. 1: eine schematische Darstellung einer erfindungsgemäßen Vorrichtung zur Kompensation von Phasenrauschen;
- Fig. 2: ein Frequenzdiagramm;
- Fig. 3: eine alternative Ausführungsform einer Vorrichtung gemäß der Erfindung; und
- Fig. 4: eine weitere Ausführungsform der Vorrichtung gemäß der Erfindung.

In der nachfolgenden Beschreibung werden für gleiche und gleichwirkende Teile dieselben Bezugsziffern verwendet.

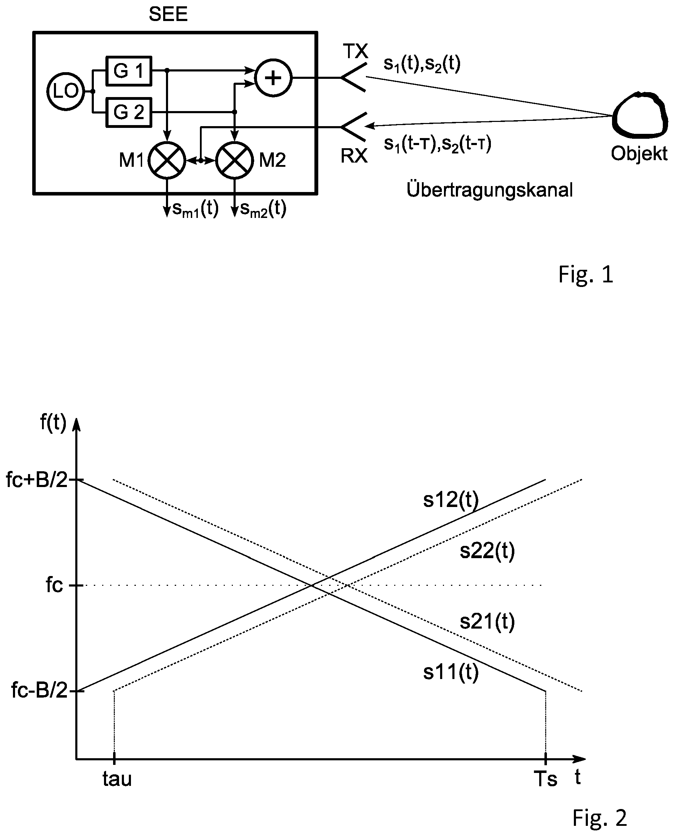

Fig. 1 zeigt ein Primär-Radarsystem. Dieses umfasst eine Sende-Empfangseinheit SEE mit mindestens einem Lokaloszillator LO, zwei Mischern M1 und M2 und zwei Modulationsgeneratoren G1 und G2. Mit dem Primär-Radarsystem gemäß Fig. 1 soll insbesondere ein Abstand zu einem oder mehreren Objekten, die von der Sende-Empfangseinheit SEE durch einen reziproken Übertragungskanal (in der Regel ein Luftübertragungskanal) getrennt sein können, bestimm werden. Dabei wird ein moduliertes Signal mittels einer Sendeantenne TX über den Übertragungskanal gesendet, von einer Empfangsantenne RX empfangen und anschließend mit den Mischern M1, M2 in ein Basisband gemischt. Eine (durch eine definierte Laufzeit verursachte) Frequenzverschiebung des gemischten Signals kann anschließend (digital) verarbeitet werden. Daraus kann dann die Abstandsinformation gewonnen werden.

Vorliegend geht es insbesondere um eine (vollständige) Kompensation von korreliertem Phasenrauschen mittels einer spezifisch konfigurierten Signalform. Dadurch soll es auf der einen Seite möglich sein, niedrigere Anforderungen an die Qualität (z.B. Frequenzstabilität) von Komponenten zu stellen, die für die Erzeugung eines hochfrequenten (Träger-) Signals verwendet werden. Auf der anderen Seite stellt das Phasenrausch-Level vorzugsweise keine untere Grenze für die Genauigkeit der Abstandsmessung (mehr) dar.

In der Ausführungsform gemäß Fig. 1 wird ein erstes Messsignal sₘ₁(t) (Mischsignal) erzeugt. Dieses kann dann von einer weiteren Komponente (die ggf. Bestandteil der Sende-Empfangseinheit SEE sein kann) empfangen und weiterverarbeitet werden (wie im Folgenden detailliert beschrieben). Gleichzeitig (oder zumindest zeitlich überlappend) wird ein zweites Messsignal sₘ₂(t) (insbesondere Mischsignal) erzeugt, von der weiteren Komponente empfangen und weiterverarbeitet. Das zweite Messsignal (Mischsignal) zeichnet sich dadurch aus, dass eine Frequenzverschiebung durch Phasenrauschen (exakt) entgegengesetzt zu dem ersten Messsignal (ersten Mischsignal) ist, das zeitgleich (oder zumindest zeitlich überlappend) ausgesendet und empfangen wird.

Fig. 1 zeigt einen (vergleichsweise einfachen) Aufbau, bei dem erstes und zweites Signal aus derselben Taktquelle LO mit den Modulationsgeneratoren G1 und G2 erzeugt werden. Alternativ kann auch nur ein Modulationsgenerator vorgesehen sein; beispielsweise ein mittels direkter digitaler Synthese (DDS) arbeitender Modulationsgenerator, verwendet werden. Dies kann zur Folge haben, dass beide Messsignale (das erste und das zweite Messsignal) durch Rauschanteile (insbesondere durch Phasenrauschen oder gleichförmig auftretende Nichtlinearitäten von FMCW-Rampen) gegensätzlich beeinflusst werden. Der Mischvorgang mit dem einen oder den beiden Mischern kann grundsätzlich vier Signalkomponenten erzeugen, wovon eine für die Messung relevante Komponente eine vergleichsweise niedrige Beat-Frequenz aufweist, und von den hochfrequenten Anteilen, beispielsweise mit einem Tiefpassfilter in Hardware- und/oder Software-Ausführung, getrennt werden kann.

Fig. 2 zeigt einen zeitlichen Verlauf von gesendeten und empfangenen Signalen. Hierbei ist s12(t) das, aus der obigen Beschreibung eines konventionellen FMCW-Radars, bekannte Sendesignal in Form einer steigenden (linearen) Frequenzrampe, und s22(t) das, an einem Objekt reflektierte, Empfangssignal. Das Signal s12(t) wird nachfolgend als erstes gesendetes Signal bezeichnet. Das Signal s22(t) wird nachfolgend als das erste reflektierte Signal bezeichnet. Zusätzlich wird nun zeitgleich ein zweites Signal s11(t) ausgesendet, reflektiert und nach einer Laufzeit im Übertragungskanal empfangen (bezeichnet als reflektiertes zweites Signal s21(t)). Bedeutsam ist hierbei, dass eine (Rampen-) Steigung dieses zweiten gesendeten Signals s22(t) negativ (bzw. mit anderem Vorzeichen als das erste gesendete Signal s12(t)) gewählt wird.

Im Allgemeinen ist der Verlauf in Fig. 2 nur als mögliche Ausführungsform anzusehen. Beispielsweise kann alternativ auch nur ein Ausschnitt des dort gezeigten Signalverlaufs gewählt bzw. verwendet werden. Insbesondere kann auch ein zeitverschobener (beispielsweise beginnend mit Ts/2) Ausschnitt gewählt werden. Eine mögliche Alternative wäre auch das (gleichzeitige) Verwenden mehrerer Frequenzrampen, beispielsweise mehrerer zweiter gesendeter Signale bzw. zweiter Messsignale (Mischsignale). Grundsätzlich können auch anderer Radarsignalformen zum Einsatz kommen, wie beispielsweise SFCW *(Stepped Frequency Continuous Wave),* orthogonales Frequenzmultiplex (OFDM), vorzugsweise zumindest solange das zweite Messsignal (Mischsignal) eine komplexe Konjugation zum ersten Messsignal (Mischsignal) aufweist.

Die in Fig. 1 dargestellten gesendeten Signale lassen sich durch ${s}_{11} \left(t\right) = {e}^{j 2 π \left(\left({f}_{c}+\frac{B}{2}\right)t-\frac{μ}{2}{t}^{2}\right)} {e}^{{jφ}_{n} \left(t\right)}$ und ${s}_{12} \left(t\right) = {e}^{j 2 π \left(\left({f}_{c}-\frac{B}{2}\right)t+\frac{μ}{2}{t}^{2}\right)} {e}^{{jφ}_{n} \left(t\right)}$ beschreiben, wobei *B* die verwendete Bandbreite des Radarsystems und *µ = B*/*Tₛ* die Sweeprate (also die Frequenzsteigerung pro Zeiteinheit) angeben. Die empfangenen Signale *s*₂₁(*t*) *= As*₁₁(*t - τ*) und *s*₂₂(*t*) *= As*₁₂(*t - τ*) werden auch hier als gedämpfte und zeitverschobene Version des ausgesendeten Signals betrachtet. Nach dem Mischvorgang der gesendeten mit den empfangenen Signalen und einer Tiefpassfilterung (vorzugsweise ausgeführt von der Hardware des Messsystems um thermisches Rauschen und Interferenzen mit anderen Funkanwendungen zu reduzieren) entstehen die Mischprodukte ${s}_{m 1} \left(t\right) = {s}_{11}^{∗} \left(t\right) {s}_{21} \left(t\right) = {Ae}^{j 2 π \left(-\left({f}_{c}+\frac{B}{2}\right)τ+μτt-\frac{μ}{2}{τ}^{2}\right)} {e}^{j \left(-{φ}_{n}\left(t\right)+{φ}_{n}\left(t-τ\right)\right)} = {Ae}^{j {Φ}_{m 1} \left(t\right)}$ und ${s}_{m 2} \left(t\right) = {s}_{22}^{∗} \left(t\right) {s}_{12} \left(t\right) = {Ae}^{j 2 π \left(-\left({f}_{c}-\frac{B}{2}\right)τ+μτt-\frac{μ}{2}{τ}^{2}\right)} {e}^{j \left({φ}_{n}\left(t\right)-{φ}_{n}\left(t-τ\right)\right)} = {Ae}^{j {Φ}_{m 2} \left(t\right)} .$

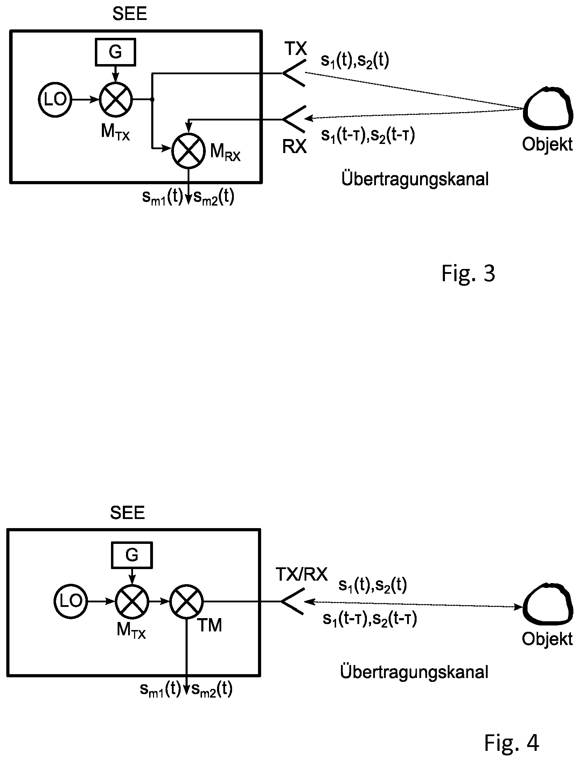

Hierbei wird angenommen, dass das Messsystem nur positive Frequenzen verarbeiten kann, was einem prinzipiellen Aufbau nach Abbildung 1 entspricht. Analog lässt sich für den Fachmann eine Beschreibung für ein System gemäß den Abbildungen 3 und 4 finden. Mit diesen Mischprodukten lassen sich durch differenzieren die beiden Beatfrequenzen ${f}_{b 1} \left(t\right) = \frac{1}{2 π} \frac{d {Φ}_{m 1} \left(t\right)}{dt} = μτ - \frac{1}{2 π} \frac{d}{dt} \left({φ}_{n}\left(t\right)-{φ}_{n}\left(t-τ\right)\right) = μτ + δf \left(t\right)$ und ${f}_{b 2} \left(t\right) = \frac{1}{2 π} \frac{d {Φ}_{m 2} \left(t\right)}{dt} = μτ + \frac{1}{2 π} \frac{d}{dt} \left({φ}_{n}\left(t\right)-{φ}_{n}\left(t-τ\right)\right) = μτ - δf \left(t\right)$ berechnen, welche, wie im oben gezeigten Fall, einer statistischen Abweichung durch den korrelierten Rauschanteil *δf*(*t*) unterliegen. Aufgrund des komplex konjugierten Phasenverlaufs der Mischsignale verschiebt sich das Signal *f*_{*b*1}(*t*) zu den höheren und das Signal *f*_{*b*2}(*t*) zu den niedrigeren Frequenzen, falls *δf*(*t*) positiv ist.

Durch Summation ergibt sich nachfolgend die (synthetische) Messfrequenz ${f}_{b} \left(t\right) = {f}_{b 1} \left(t\right) + {f}_{b 2} \left(t\right) = 2 μτ ,$ die keine Abhängigkeit vom korrelierten Phasenrauschen *δf*(*t*) mehr aufweist. Dieses Ergebnis kann nach *τ* aufgelöst werden und über den Zusammenhang *τ* = *2x*/*c*₀*,* mit der Ausbreitungsgeschwindigkeit *c*₀ der elektromagnetischen Welle, der Abstand zu einem Objekt geschätzt werden.

Aufgrund des linearen Zusammenhangs ist die Detektion von mehreren Objekten, also der Empfang von mehreren zeitverschobenen und gedämpften Kopien (Superposition, bzw. Linearkombination von Zielantworten) des gesendeten Signals durchführbar.

Die Ausführungsform gemäß Fig. 1 umfasst zwei (reellwertige) Mischer, die insbesondere zur Trennung von Up- und Downsweep verwendet werden können. Diese können ggf. durch nur einen (komplexen) Mischer ersetzt werden (insbesondere dem Mischer M_{RX} in Fig. 3). Hierbei kann ein Messsignal (Mischsignal) mit positiver, und ein zweites Messsignal (Mischsignal) mit negativer Frequenz erzeugt werden. Alternativ oder zusätzlich können auch die beiden Modulationsgeneratoren G1 und G2 in Fig. 1 durch einen Modulationsgenerator G (siehe Fig. 3) ersetzt werden. Dessen Signal kann dann anschließend ggf. mit einem Sendemischer M_{TX} gemischt werden, wobei die beiden Sendesignale (gemäß Fig. 3) ggf. ein oberes und ein unteres Seitenband darstellen können.

In der Ausführungsform gemäß Fig. 4 ist anstelle von zwei (separaten) Sende- und Empfangsantennen eine einzige Antenne vorgesehen, die (gemeinsam) zum Senden und Empfangen genutzt wird. Dabei kann ein Transmissionsmischer (TM) verwendet werden, der insbesondere vorteilhafte Übertragungseigenschaften bei FMCW-Systemen aufweisen kann.

Das oben beschriebene Verfahren bzw. das oben beschriebene System kann zur Unterdrückung von Phasenrauschen verwendet werden, insbesondere auch um beispielsweise Hardwareanforderungen (wie z.B. an die Güte einer Phasenregelschleife) zur phasenrauscharmen Erzeugung eines hochfrequenten Trägersignals zu reduzieren. Ein daraus resultierender Fehler kann (nachträglich) durch das oben beschriebene Verfahren kompensiert werden.

### Bezugszeichenliste

- G: Modulationsgenerator
- G1: Modulationsgenerator
- G2: Modulationsgenerator
- LO: Lokaloszillator
- M: Mischer
- M1: Mischer
- M2: Mischer
- M_{RX}: (Empfangs-) Mischer
- M_{TX}: (Sende-) Mischer
- RX: Empfangsantenne
- s₁(t): Erstes Signal
- s₂(t): Zweites Signal
- s₁(t-τ): Erstes reflektiertes bzw. empfangenes Signal
- s₂(t-τ): Zweites reflektiertes bzw. empfangenes Signal
- sₘ₁(t): Erstes Messsignal (Mischsignal)
- sₘ₂(t): Zweites Messsignal (Mischsignal)
- SEE: Sende-Empfangseinheit
- TM: (Transmissions-) Mischer
- TX: Sendeantenne

## Patentansprüche

1. Verfahren zur Kompensation von Rauschen, insbesondere Phasenrauschen, in einem Primärradarsystem,
wobei ein erstes Sendesignal mit einem ersten, durch das Rauschen verursachten, Störanteil durch eine Sende-Empfangseinheit gesendet wird, wobei mindestens ein zweites Sendesignal mit einem zweiten, durch das Rauschen verursachten, Störanteil zeitgleich oder zeitlich überlappend mit dem ersten Sendesignal durch die Sende-Empfangseinheit gesendet wird, wobei die Sendesignale derart beschaffen sind, dass bei einer Weiterverarbeitung und Auswertung der Sendesignale Phasen- und/oder Frequenzverschiebungen, die aus den Störanteilen resultieren, zumindest teilweise kompensiert werden,
- wobei das erste Sendesignal an mindestens einem Objekt reflektiert wird, so dass ein erstes reflektiertes Empfangssignal (s₁(t-τ)) die Sende-Empfangseinrichtung erreicht,
- wobei ein erstes Messsignal (sₘ₁(t)) aus dem ersten Sendesignal (s₁(t)) und dem ersten Empfangssignal (s₁(t-τ)), insbesondere durch Mischen und/oder durch Korrelieren, generiert wird,
- wobei das zweite Sendesignal an mindestens einem Objekt reflektiert wird, so dass ein zweites Empfangssignal (s₂(t-τ)) die Sende-Empfangseinrichtung erreicht, und
- wobei ein zweites Messsignal (sₘ₂(t)) aus dem zweiten Sendesignal (s₂(t)) und dem zweiten Empfangssignal (s₂(t-τ)), insbesondere durch Mischen und/oder durch Korrelieren, generiert wird;
wobei ein Basis-HF-Signal für erstes (sₘ₁(t)) und zweites (sₘ₂(t)) Messsignal bzw. für das erste (s₁(t)) und zweite (s₂(t)) Sendesignal durch denselben HF-Generator (LO) erzeugt wird, und
wobei das erste Sendesignal (s₁(t)) mindestens eine Frequenzrampe mit einer ersten Steigung und das zweite Sendesignal (s₂(t)) mindestens eine Frequenzrampe mit einer zweiten Steigung aufweist, wobei die erste Steigung ein anderes Vorzeichen hat als die zweite Steigung, wobei ein Betrag der ersten und zweiten Steigung zumindest im Wesentlichen gleich ist;
wobei das erste Sendesignal bzw. erste Messsignal (sₘ₁(t)) auf einem Output eines ersten Modulationsgenerators (G1) beruht und das zweite Sendesignal bzw. zweite Messsignal (sₘ₂(t)) auf einem Output eines zweiten Modulationsgenerators (G2) beruht, oder wobei das erste Sendesignal bzw. das erste Messsignal (sₘ₁(t)) und das zweite Sendesignal bzw. das zweite Messsignal (sₘ₂(t)) auf einem Output eines gemeinsamen Modulationsgenerators (G) beruhen.

2. Verfahren nach Anspruch 1, wobei ein erster, aus dem Rauschen resultierender, Störanteil des ersten Messsignals (sₘ₁(t)) und ein zweiter, aus dem Rauschen resultierender, Störanteil des zweiten Messsignals (sₘ₂(t)) komplex konjugiert zueinander sind.

3. Verfahren nach einem der vorhergehenden Ansprüche, wobei das erste Sendesignal einen ersten Faktor aufweist, der komplex konjugiert zu einem zweiten Faktor des zweiten Sendesignals (s₂(t)) ist.

4. Verfahren nach einem der vorangehenden Ansprüche, wobei ein (Grund-)Signal für das erste und/oder zweite Sendesignal erzeugt wird und dann mit einem Modulationsgenerator, insbesondere Vektormodulator, das jeweilige Sendesignal moduliert wird, wobei das erste und/oder zweite Sendesignal vorzugsweise dadurch erzeugt wird/werden, dass ein Modulationssignal auf einen reellen oder komplexen Eingang des Modulationsgenerators, insbesondere Vektormodulators, gelegt wird, vorzugsweise derart, dass zusätzlich zum ersten Sendesignal das zweite - und vorzugsweise gespiegelte - Sendesignal erzeugt wird.

5. Verfahren nach einem der vorangehenden Ansprüche,
wobei aus dem ersten und/oder zweiten Messsignal eine Frequenz, vorzugsweise enthaltend eine Laufzeitinformation, insbesondere Beatfrequenz, abgeleitet wird und/oder
wobei die Messsignale oder aus den Messsignalen abgeleitete Signale oder Teile davon, insbesondere eine jeweilige Frequenz, vorzugsweise enthaltend eine Laufzeitinformation, insbesondere Beatfrequenz, miteinander kombiniert, vorzugsweise addiert werden.

6. Verfahren nach einem der vorangehenden Ansprüche, insbesondere nach einem der Ansprüche 2 bis 4,
wobei das erste Messsignal (sₘ₁(t)) durch
einen ersten Mischer (M1) erzeugt wird und das zweite Messsignal (sₘ₂(t)) durch einen zweiten Mischer (M2) erzeugt wird oder
wobei das erste Messsignal (sₘ₁(t)) und das zweite Messsignal (sₘ₂(t)) durch einen gemeinsamen, insbesondere komplexen, Mischer (M) erzeugt werden.

7. Vorrichtung zur Kompensation von Rauschen, insbesondere Phasenrauschen, in einem Primärradarsystem, insbesondere zur Durchführung des Verfahrens nach einem der vorangehenden Ansprüche, umfassend eine Sende-Empfangseinheit ausgebildet zum Erzeugen und Senden eines ersten Sendesignals mit einem ersten, durch das Rauschen verursachten, Störanteil und ausgebildet zum Erzeugen und gleichzeitigen oder zeitlich überlappenden Senden mindestens eines zweiten Sendesignals mit einem zweiten, durch das Rauschen verursachten, Störanteil derart, dass bei einer Weiterverarbeitung und Auswertung der Sendesignale Phasen- und/oder Frequenzverschiebungen, die aus den Störanteilen resultieren, zumindest teilweise kompensierbar sind, wobei die Vorrichtung weiterhin umfasst:
**³** eine Messsignalgenerierungseinrichtung zum Generieren eines ersten (sₘ₁(t)) Messsignals aus dem ersten Sendesignal und einem ersten, auf einer Reflexion des ersten Sendesignals basierenden, Empfangssignal und zum Generieren mindestens eines zweiten (sₘ₂(t)) Messsignals aus dem zweiten Sendesignal und einem zweiten, auf einer Reflexion des zweiten Sendesignals basierenden, Empfangssignal;
einen HF-Generator (LO) zur Erzeugung eines Basis-HF-Signals für das erste und zweite Sendesignal bzw. für das erste (sₘ₁(t)) und das zweite (sₘ₂(t)) Messsignal, wobei das erste Sendesignal mindestens eine Frequenzrampe mit einer ersten Steigung und das zweite Sendesignal mindestens eine Frequenzrampe mit einer zweiten Steigung aufweist, wobei die erste Steigung ein anderes Vorzeichen hat als die zweite Steigung, wobei ein Betrag der ersten und zweiten Steigung zumindest im Wesentlichen gleich ist;
einen ersten Modulationsgenerator (G1), auf dessen Output das erste Sendesignal bzw. erste Messsignal (sₘ₁(t)) beruht und einen zweiten Modulationsgenerator (G2), auf dessen Output das zweite Sendesignal bzw. zweite Messsignal (sₘ₂(t)) beruht, oder einen gemeinsamen Modulationsgenerator (G), auf dessen Output das erste Sendesignal bzw. erste Messsignal (sₘ₁(t)) und
das zweite Sendesignal bzw. zweite Messsignal (sₘ₂(t)) beruhen.

8. Vorrichtung nach Anspruch 7, wobei ein erster, aus dem Rauschen resultierender, Störanteil des ersten Messsignals (sₘ₁(t)) und ein zweiter, aus dem Rauschen resultierender, Störanteil des zweiten Messsignals (sₘ₂(t)) komplex konjugiert zueinander sind.

9. Vorrichtung nach einem der Ansprüche und 8, wobei das erste Sendesignal einen ersten Faktor aufweist, der komplex konjugiert zu einem zweiten Faktor des zweiten Sendesignals (s₂(t)) ist.

10. Vorrichtung nach einem der Ansprüche 7 bis 9, wobei die Sende-Empfangseinheit eine Sendeantenne (TX) und eine Empfangsantenne (RX umfasst, wobei die Sendeantenne (TX) das erste und zweite Signal sendet und die Empfangsantenne (RX) das erste und zweite reflektierte Signal empfängt, oder
wobei die Sende-Empfangseinheit eine gemeinsame Sende-Empfangsantenne (TX/RX) umfasst, wobei die gemeinsame Sende-Empfangsantenne (TX/RX) das erste Signal (s₁(t)) sendet und das erste reflektierte Signal (s₁(t-τ)) empfängt und das zweite Signal (s₂(t)) sendet und das zweite reflektierte Signal (s₂(t-τ)) empfängt.

11. Vorrichtung nach einem der Ansprüche 7 bis 10,
wobei die Messsignalgenerierungseinrichtung einen oder mehrere Mischer (M1, M2; M_{RX}; TM)
zum Generieren des ersten Messsignals (sₘ₁(t)) aus dem ersten Sendesignal (s₁(t)) und dem ersten Empfangssignal (s₁(t-τ)) durch Mischen, und/oder zum
Generieren des zweiten Messsignals (sₘ₂(t)) aus dem zweiten Sendesignal (s₂(t)) und dem zweiten Empfangssignal (s₂(t-τ)) durch Mischen, umfasst.

12. Vorrichtung nach einem der Ansprüche bis 11,
wobei die Messsignalgenerierungseinrichtung eine erste Messsignalgenerierungseinheit, insbesondere einen ersten Mischer (M1) und eine zweite Messsignalgenerierungseinheit, insbesondere einen zweiten Mischer (M2) umfasst, wobei die erste Messsignalgenerierungseinheit das erste Messsignal, insbesondere durch Mischen, generiert und die zweite Messsignalgenerierungseinheit das zweite Messsignal, insbesondere durch Mischen, generiert oder
wobei die Messsignalgenerierungseinrichtung eine gemeinsame Messsignalgenerierungseinheit, insbesondere einen gemeinsamen Mischer (M_{RX}, TX) umfasst, wobei die gemeinsame Messsignalgenerierungseinheit das erste Messsignal, insbesondere durch Mischen, generiert und das zweite Messsignal, insbesondere durch Mischen, generiert.

13. Verwendung eines Verfahrens nach einem der Ansprüche 1 bis 6,
und/oder einer Vorrichtung nach einem der Ansprüche 7 bis 12, zur Steigerung der Genauigkeit einer Abstandsmessung in einem Fernerkundungssystem.

14. Radar-System, insbesondere Primär-Radarsystem, mit einer Sende-Empfangseinheit ausgebildet zur Durchführung des Verfahrens nach einem der Ansprüche 1 bis 6, und/oder umfassend eine Vorrichtung nach einem der Ansprüche 7 bis 12.

## Claims

1. Method for compensating for noise, in particular phase noise, in a primary radar system,
wherein a first transmission signal having a first interference component caused by the noise is transmitted by a transceiver unit, wherein at least one second transmission signal having a second interference component caused by the noise is transmitted simultaneously or chronologically overlapping with the first transmission signal by the transceiver unit,
wherein the transmission signals are supplied such that upon further processing and evaluation of the transmission signals, phase and/or frequency shifts resulting from the interference components are at least partially compensated,
- wherein the first transmission signal is reflected on at least one object, so that a first reflected reception signal (s₁(t-τ)) reaches the transceiver device,
- wherein a first measurement signal (sₘ₁(t)) is generated from the first transmission signal (s₁(t)) and the first reception signal (s₁(t-τ)), in particular by mixing and/or correlating,
- wherein the second transmission signal is reflected on at least one object, so that a second reception signal (s₂(t-τ)) reaches the transceiver device, and
- wherein a second measurement signal (sₘ₂(t)) is generated from the second transmission signal (s₂(t)) and the second reception signal (s₂(t-τ)), in particular by mixing and/or correlating;
wherein a base HF signal is generated for the first (sₘ₁(t)) and second (sₘ₂(t)) measurement signal or for the first (s₁(t)) and second (s₂(t)) transmission signal by the same HF generator (LO), and
wherein the first transmission signal (s₁(t)) has at least one frequency ramp having a first slope and the second transmission signal (s₂(t)) has at least one frequency ramp having a second slope, wherein the first slope has a different sign than second slope, wherein an absolute value of the first and second slope is at least substantially equal;
wherein the first transmission signal or first measurement signal (sₘ₁(t)) is based on an output of a first modulation generator (G1) and the second transmission signal or second measurement signal (sₘ₂(t)) is based on an output of a second modulation generator (G2), or wherein the first transmission signal or the first measurement signal (sₘ₁(t)) and the second transmission signal or the second measurement signal (sₘ₂(t)) are based on an output of a common modulation generator (G).

2. Method as claimed in claim 1, wherein a first interference component of the first measurement signal (sₘ₁(t)) resulting from the noise and a second interference component of the second measurement signal (sₘ₂(t)) resulting from the noise are complex conjugates of one another.

3. Method as claimed in any one of the preceding claims, wherein the first transmission signal has a first factor which is the complex conjugate of a second factor of the second transmission signal (s₂(t)).

4. Method as claimed in any one of the preceding claims, wherein a (base) signal is generated for the first and/or second transmission signal and the respective transmission signal is then modulated using a modulation generator, in particular a vector modulator, wherein the first and/or second transmission signal is/are preferably generated in that a modulation signal is applied to a real or complex input of the modulation generator, in particular the vector modulator, preferably such that in addition to the first transmission signal, the second - preferably mirrored - transmission signal is generated.

5. Method as claimed in any one of the preceding claims, wherein a frequency, preferably containing time-of-flight information, in particular beat frequency, is derived from the first and/or second measurement signal, and/or
wherein the measurement signals or signals derived from the measurement signals or parts thereof, in particular a respective frequency, preferably containing time-of-flight information, in particular beat frequency, are combined, preferably added with one another.

6. Method as claimed in any one of the preceding claims, in particular as claimed in any one of claims 2 to 4, wherein the first measurement signal (sₘ₁(t)) is generated by a first mixer (M1) and the second measurement signal (sₘ₂(t)) is generated by second mixer (M2) or
wherein the first measurement signal (sₘ₁(t)) and the second measurement signal (sₘ₂(t)) are generated by a common, in particular complex, mixer (M).

7. Device for compensating for noise, in particular phase noise, in a primary radar system, in particular for carrying out the method as claimed in any one of the preceding claims, comprising a transceiver unit designed to generate and transmit a first transmission signal having a first interference component caused by the noise and designed to generate and transmit, in a simultaneous or chronologically overlapping manner, at least one second transmission signal having a second interference component caused by the noise such that, upon further processing and evaluation of the transmission signals, phase and/or frequency shifts resulting from the interference components can be at least partially compensated, wherein the device furthermore comprises:
a measurement signal generating device for generating a first (sₘ₁(t)) measurement signal from the first transmission signal and a first reception signal based on a reflection of the first transmission signal and for generating at least one second (sₘ₂(t)) measurement signal from the second transmission signal and a second reception signal based on a reflection of the second transmission signal;
an HF generator (LO) for generating a base HF signal for the first and second transmission signal or for the first (sₘ₁(t)) and the second (sₘ₂(t)) measurement signal, wherein the first transmission signal has at least one frequency ramp having a first slope and the second transmission signal has at least one frequency ramp having a second slope, wherein the first slope has different sign than the second slope, wherein an absolute value of the first and second slope is at least substantially equal;
a first modulation generator (G1), on the output of which the first transmission signal or first measurement signal (sₘ₁(t)) is based, and a second modulation generator (G2), on the output of which the second transmission signal or second measurement signal (sₘ₂(t)) is based, or a common modulation generator (G), on the output of which the first transmission signal or first measurement signal (sₘ₁(t)) and the second transmission signal or second measurement signal (sₘ₂(t)) are based.

8. Device as claimed in claim 7, wherein a first interference component of the first measurement signal (sₘ₁(t)) resulting from the noise and a second interference component of the second measurement signal (sₘ₂(t)) resulting from the noise are complex conjugates of one another.

9. Device as claimed in either one of claims 7 and 8, wherein the first transmission signal has a first factor which is the complex conjugate of a second factor of the second transmission signal (s₂(t)).

10. Device as claimed in any one of claims 7 to 9, wherein the transceiver unit comprises a transmitting antenna (TX) and a receiving antenna (RX), wherein the transmitting antenna (TX) transmits the first and second signal and the receiving antenna (RX) receives the first and second reflected signal, or
wherein the transceiver unit comprises a common transceiver antenna (TX/RX), wherein the common transceiver antenna (TX/RX) transmits the first signal (s₁(t)) and receives the first reflected signal (s₁(t-τ)) and transmits the second signal (s₂(t)) and receives the second reflected signal (s₂(t-τ)).

11. Device as claimed in any one of claims 7 to 10,
wherein the measurement signal generating device comprises one or more mixers (M1, M2; M_{RX}; TM)
for generating the first measurement signal (sₘ₁(t)) from the first transmission signal (s₁(t)) and the first reception signal (s₁(t-τ)) by mixing, and/or
for generating the second measurement signal (sₘ₂(t)) from the second transmission signal (s₂(t)) and the second reception signal (s₂(t-τ)) by mixing.

12. Device as claimed in any one of claims 7 to 11, wherein the measurement signal generating device comprises a first measurement signal generating unit, in particular a first mixer (M1), and a second measurement signal generating unit, in particular a second mixer (M2), wherein the first measurement signal generating unit generates the first measurement signal, in particular by mixing, and the second measurement signal generating unit generates the second measurement signal, in particular by mixing, or
wherein the measurement signal generating device comprises a common measurement signal generating unit, in particular a common mixer (M_{RX}, TX), wherein the common measurement signal generating unit generates the first measurement signal, in particular by mixing, and generates the second measurement signal, in particular by mixing.

13. Use of a method as claimed in any one of claims 1 to 6, and/or a device as claimed in any one of claims 7 to 12, for increasing the accuracy of a distance measurement in a remote-sensing system.

14. Radar system, in particular primary radar system, having a transceiver unit designed to carry out the method as claimed in any one of claims 1 to 6, and/or comprising a device as claimed in any one of claims 7 to 12.

## Revendications

1. Procédé pour la compensation du bruit de fond, en particulier du bruit de phase, dans un système de radar primaire,
dans lequel un premier signal émis avec une première composante parasite causée par le bruit de fond est émise par une unité d'émetteur-récepteur,
dans lequel au moins un deuxième signal émis avec une deuxième composante parasite causée par le bruit de fond est émise simultanément ou avec un chevauchement dans le temps avec le premier signal émis par l'unité d'émetteur-récepteur,
dans lequel les signaux émis sont conformés de telle manière que des décalages de phase et/ou de fréquence résultant des composantes parasites soient au moins en partie compensés lors de la suite du traitement et de l'analyse des signaux émis,
- le premier signal émis étant réfléchi par au moins un objet de sorte qu'un premier signal reçu (s₁(t-τ)) réfléchi atteigne l'unité d'émetteur-récepteur,
- un premier signal de mesure (sₘ₁(t)) étant généré à partir du premier signal émis (s₁(t)) et du premier signal reçu (s₁(t-τ)), en particulier par mixage et/ou par corrélation,
- le deuxième signal émis étant réfléchi par au moins un objet de sorte qu'un deuxième signal reçu (s₂(t-τ)) atteigne l'unité d'émetteur-récepteur et
- un deuxième signal de mesure (sₘ₂(t)) étant généré à partir du deuxième signal émis (s₂(t)) et du deuxième signal reçu (s₂(t-τ)), en particulier par mixage et/ou par corrélation,
dans lequel un signal HF de base pour le premier signal de mesure (sₘ₁(t)) et le deuxième (sₘ₂(t)) ou pour le premier signal émis (s₁(t)) et le deuxième (s2(t)) est généré par le même générateur HF (LO) et
dans lequel le premier signal émis (s₁(t)) comporte au moins une rampe de fréquence d'une première pente et le deuxième signal émis (s₂(t)) au moins une rampe de fréquence d'une deuxième pente, la première pente ayant un signe différent de la deuxième pente, une grandeur de la première pente et de la deuxième étant au moins sensiblement égale,
dans lequel le premier signal émis ou le premier signal de mesure (sₘ₁(t)) est basé sur une sortie d'un premier générateur de modulation (G1) et le deuxième signal émis ou le deuxième signal de mesure (sₘ₂(t)) sur une sortie d'un deuxième générateur de modulation (G2), ou le premier signal émis ou le premier signal de mesure (sₘ₁(t)) et le deuxième signal émis ou le deuxième signal de mesure (sₘ₂(t)) sont basés sur une sortie d'un générateur de modulation commun (G).

2. Procédé selon la revendication 1, dans lequel une première composante parasite résultant du bruit de fond du premier signal de mesure (sₘ₁(t)) et une deuxième composante parasite résultant du bruit de fond du deuxième signal de mesure (sₘ₂(t)) font l'objet d'une conjugaison complexe de l'une avec l'autre.

3. Procédé selon l'une des revendications précédentes, dans lequel le premier signal émis présente un premier facteur qui fait l'objet d'une conjugaison complexe avec un deuxième facteur du deuxième signal émis (s₂(t)).

4. Procédé selon l'une des revendications précédentes, dans lequel un signal (de base) pour le premier signal émis et/ou le deuxième est généré, puis le signal émis en question est modulé avec un générateur de modulation, en particulier un modulateur vectoriel, le premier signal émis et/ou le deuxième étant de préférence émis en appliquant un signal de modulation à une entrée réelle ou complexe du générateur de modulation, en particulier du modulateur vectoriel, de préférence de telle façon que le deuxième signal émis soit émis, de préférence en miroir, en plus du premier signal émis.

5. Procédé selon l'une des revendications précédentes, dans lequel une fréquence, contenant de préférence une information de durée, en particulier une fréquence de battement, est dérivée du premier signal de mesure et/ou du deuxième, et/ou
dans lequel les signaux de mesure ou des signaux dérivés des signaux de mesure ou des parties de ceux-ci, en particulier une fréquence correspondante, contenant de préférence une information de passage, en particulier une fréquence de battement, sont combinés entre eux, de préférence additionnés.

6. Procédé selon l'une des revendications précédentes, en particulier selon l'une des revendications 2 à 4, dans lequel le premier signal de mesure (sₘ₁(t)) est généré par un premier mélangeur (M1) et le deuxième signal de mesure (sₘ₂(t)) par un deuxième mélangeur (M2) ou
dans lequel le premier signal de mesure (sₘ₁(t)) et le deuxième signal de mesure (sₘ₂(t)) sont générés par un mélangeur commun (M), en particulier complexe.

7. Dispositif pour la compensation du bruit de fond, en particulier du bruit de phase, dans un système de radar primaire, en particulier pour l'exécution du procédé selon l'une des revendications précédentes, comprenant une unité d'émetteur-récepteur conçue pour générer et émettre un premier signal émis avec une première composante parasite causée par le bruit de fond et pour générer et émettre, simultanément ou avec un chevauchement dans le temps, au moins un deuxième signal émis avec une deuxième composante parasite causée par le bruit de fond, de telle manière que des décalages de phase et/ou de fréquence résultant des composantes parasites puissent être au moins en partie compensés lors de la suite du traitement et de l'analyse des signaux émis, lequel dispositif comprend en outre :
une installation de génération de signaux de mesure pour la génération d'un premier (sₘ₁(t)) signal de mesure à partir du premier signal émis et d'un premier signal reçu basé sur la réflexion du premier signal émis et pour la génération d'au moins un deuxième (sₘ₂(t)) signal de mesure à partir du deuxième signal émis et d'un deuxième signal reçu basé sur la réflexion du deuxième signal émis ;
un générateur HF (LO) pour générer un signal HF de base pour le premier signal émis et le deuxième ou pour le premier (sₘ₁(t)) signal de mesure et le deuxième (sₘ₂(t)), le premier signal émis comportant au moins une rampe de fréquence d'une première pente et le deuxième signal émis au moins une rampe de fréquence d'une deuxième pente, la première pente ayant un signe différent de la deuxième pente, une grandeur de la première pente et de la deuxième étant au moins sensiblement égale ;
un premier générateur de modulation (G1) sur la sortie duquel le premier signal émis ou le premier signal de mesure (sₘ₁ (t)) est basé et un deuxième générateur de modulation (G2) sur la sortie duquel le deuxième signal émis ou le deuxième signal de mesure (sₘ₂(t)) est basé, ou un générateur de modulation commun (G) sur la sortie duquel le premier signal émis ou le premier signal de mesure (sₘ₁(t)) et le deuxième signal émis ou le deuxième signal de mesure (sₘ₂(t)) sont basés.

8. Dispositif selon la revendication 7, dans lequel une première composante parasite résultant du bruit de fond du premier signal de mesure (sₘ₁(t)) et une deuxième composante parasite résultant du bruit de fond du deuxième signal de mesure (sₘ₂(t)) font l'objet d'une conjugaison complexe de l'une avec l'autre.

9. Dispositif selon l'une des revendications 7 et 8, dans lequel le premier signal émis présente un premier facteur qui fait l'objet d'une conjugaison complexe avec un deuxième facteur du deuxième signal émis (s₂(t)).

10. Dispositif selon l'une des revendications 7 à 9, dans lequel l'unité d'émetteur-récepteur comprend une antenne d'émission (TX) et une antenne de réception (RX), l'antenne d'émission (TX) émettant le premier signal et le deuxième et l'antenne de réception (RX) recevant le premier signal réfléchi et le deuxième ou
dans lequel l'unité d'émetteur-récepteur comprend une antenne commune d'émission et de réception (TX/RX), laquelle antenne commune d'émission et de réception (TX/RX) émet le premier signal (s₁(t)) et reçoit le premier signal réfléchi (s₁(t-τ)) et émet le deuxième signal (s₂(t)) et reçoit le deuxième signal réfléchi (s₂(t-T)).

11. Dispositif selon l'une des revendications 7 à 10, dans lequel l'installation de génération de signaux de mesure comprend un ou plusieurs mélangeurs (M1, M2 ; M_{RX} ; TM) pour la génération du premier signal de mesure (sₘ₁(t)) à partir du premier signal émis (s₁(t)) et du premier signal reçus (s₁(t-τ)) par mixage, et/ou pour la génération du deuxième signal de mesure (sₘ₂(t)) à partir du deuxième signal émis (s₂(t)) et du deuxième signal reçu (s₂(t-τ)) par mixage.

12. Dispositif selon l'une des revendications 7 à 11, dans lequel l'installation de génération de signaux de mesure comprend une première unité de génération de signaux de mesure, en particulier un premier mélangeur (M1), et une deuxième unité de génération de signaux de mesure, en particulier un deuxième mélangeur (M2), la première unité de génération de signaux de mesure générant le premier signal de mesure, en particulier par mixage, et la deuxième unité de génération de signaux de mesure générant le deuxième signal de mesure, en particulier par mixage, ou
dans lequel l'installation de génération de signaux de mesure comprend une unité commune de génération de signaux de mesure, en particulier un mélangeur commun (M_{RX}, TX), l'unité commune de génération de signaux de mesure générant le premier signal de mesure, en particulier par mixage, et le deuxième signal de mesure, en particulier par mixage.

13. Utilisation d'un procédé selon l'une des revendications 1 à 6 et/ou d'un dispositif selon l'une des revendications 7 à 12 pour accroître la précision d'une mesure de la distance dans un système de télédétection.

14. Système de radar, en particulier système de radar primaire, équipé d'une unité d'émetteur-récepteur conçue en vue de la mise en œuvre du procédé selon l'une des revendications 1 à 6 et/ou comprenant un dispositif selon l'une des revendications 7 à 12.
